# EUROPÄISCHE PATENTSCHRIFT

(11) **EP 1 984 602 B1**
(45) Veröffentlichungstag und Bekanntmachung des Hinweises auf die Patenterteilung: **21.10.2015**
(21) Anmeldenummer: 07726279.8
(22) Anmeldetag: 02.02.2007
(51) Int. Cl.: F01K 25/08, F01D 1/08, F01D 25/22, H02K 1/32, F01D 15/10, H02K 5/20, F02C 7/12, F02C 7/16, H02K 9/193, H02K 9/20, H02K 9/197

(54) **ORGANIC RANKINE ZYKLUS (ORC) - TURBOGENERATOR**
ORGANIC RANKINE CYCLE (ORC) TURBOGENERATOR
TURBOGÉNÉRATEUR À CYCLE DE RANKINE À CALOPORTEUR ORGANIQUE (ORC)

(30) Priorität: 02.02.2006 DE 102006004836
(43) Veröffentlichungstag der Anmeldung: 29.10.2008
(73) Patentinhaber: Eckert, Frank, 07356 Bad Lobenstein (DE)
(72) Erfinder: Eckert, Frank, 07356 Bad Lobenstein (DE)
(74) Vertreter: Meissner, Bolte & Partner GbR
(86) Internationale Anmeldenummer: PCT/EP2007/051002
(87) Internationale Veröffentlichungsnummer: WO 2007/088194

(56) Entgegenhaltungen:
- WO-A-82/02741
- WO-A-93/01397
- US-A- 2 173 489
- US-A- 3 061 733
- US-A- 3 800 174
- US-A1- 2004 088 992

## Beschreibung

Die Erfindung betrifft einen Organic Rankine Zyklus (ORC)-Turbogenerator in einer axialen Anordnung zwischen einem Turbinen-Dampfgehäuse und einem Generatorabschnitt nach dem Oberbegriff des Anspruchs 1.

Der Organic Rankine Zyklus (ORC für engl. organic rankine cycle) ist ein thermodynamisches Verfahren zum Betrieb von Dampfturbinen mit einem anderen Arbeitsmittel als Wasser bzw. Wasserdampf. Als Arbeitsmedium werden bei diesem Kreisprozess meist organische Flüssigkeiten mit einer niedrigen Verdampfungstemperatur verwendet. Ein solches Verfahren wird vor allem dann eingesetzt, wenn das zur Verfügung stehende Temperaturgefälle zwischen Wärmequelle und Wärmesenke zu niedrig für eine mit Wasserdampf angetriebene Turbine ist. Ein derartiger Zyklus wird daher vorwiegend zur Stromerzeugung mit Hilfe der Geothermie, einer Kraft-Wärme-Kopplung, bei Solarteichkraftwerken oder Meereswärmekraftwerken eingesetzt.

Bei kleinen Anlagen mit einer Leistung von weniger als 500 kW sind die spezifischen Kosten einer Turbinen-Generatoreinheit in einer herkömmlichen Bauform zu groß. Im Gegensatz zu Dampfturbinen laufen die entsprechenden thermodynamischen Kreisprozesse bei einer wesentlich niedrigeren Temperatur ab. Dadurch besteht die Möglichkeit, die Turbine und den Generator zu einer Einheit zusammen zufassen. Dazu wird in einer bekannten Ausführungsform auf eine axiale Anordnung aus Turbine und Generator zurückgegriffen. Dabei ist das Schaufelrad der Turbine direkt auf der Generatorwelle befestigt. Die Befestigung wird bevorzugt als eine sich selbst zentrierende Befestigung, z.B. eine Hirtverzahnung ausgeführt. Die Turbinenwelle wird hierbei mittels einer Gleitringdichtung nach außen hin abgedichtet und führt direkt in den dahinter angekoppelten Generator.

Derartige Ausführungsformen weisen jedoch das Problem auf, dass das Arbeitsmedium vor allem bei hohen Drehzahlen der Turbine durch die Gleitringdichtung an der Verbindungsstelle zwischen Turbine und Generator infolge von Materialermüdungen und daraus resultierenden Lecks der Gleitringdichtung nach außen dringen kann. Derartige Turbogeneratoren erfordern somit einen erhöhten Wartungsaufwand und damit einhergehende größere Unterhaltungskosten.

Einen Turbogenerator, des Arbeitsmittel zur Generatorkühlung verwendet, zeigt das Dokument WO 82/02741 US 3,038,556 zeigt eine Struktur zur Schmierung eines Gasturbinentriebwerks.

Es besteht die Aufgabe, einen Turbogenerator zum Einsatz in einem ORC-Kreisprozess anzugeben, der einen robusten, wartungsarmen und auch bei sehr hohen Drehzahlen leckagesicheren Aufbau aufweist. Der geforderte Turbogenerator soll außerdem eine optimale innere Kühlung bei einem möglichst kompakten und platzsparenden Aufbau aufweisen.

Die Aufgabe wird mit einem ORC-Turbogenerator mit den Merkmalen des Anspruchs 1 gelöst, wobei die Unteransprüche zweckmäßige bzw. vorteilhafte Ausführungsformen enthalten.

Erfindungsgemäß ist der ORC-Turbogenerator dadurch gekennzeichnet, dass der Generatorabschnitt ein zur Umgebung hin dichtes und druckfest ausgebildetes Statorgehäuse in Verbindung mit einem in Richtung des Abdampfraumes des Turbinenabschnittes offenen Läuferraum aufweist.

Im Gegensatz zu den aus dem Stand der Technik bekannten Ausführungsformen, bei denen der Turbinenabschnitt und der Generatorabschnitt strikt voneinander getrennt sind, bildet bei dem erfindungsgemäßen ORC-Turbogenerator der Stator des Generatorabschnittes zusammen mit der Außenhülle des Turbinenabschnitts eine durchgängige und zur Umgebung hin drucksichere und absolut dichte Hülle, während der Läuferraum im Inneren des Stators mit dem Abdampfraum in Verbindung steht. Damit entfällt einerseits die Gleitlagerdichtung vollständig, wobei sich der Dichtungsaufwand an der Turbinenwelle beträchtlich verringert und höhere Drehzahlen des Turbogenerators erreicht werden können. Die Luftreibung im Läuferinnenraum zwischen Läufer und Stator wird durch den im Abdampfraum des Turbinenabschnitts herrschenden Unterdruck minimiert, wodurch sich die Laufleistung des Turbogenerators zusätzlich erhöht.

Die Lagerung einer Generatorwelle ist in Form mindestens eines durch das Kondensat des ORC-Arbeitsmittels geschmierten Gleitlagers ausgebildet. Das Gleitlager dient zur Lagerung sowohl des Läufers im Generatorabschnitt, als auch des im Turbinenabschnitt angeordneten Turbinenläufers. Durch den Einsatz des kondensierten und sich in der Dampfphase wieder selbst von Verunreinigungen scheidenden ORC-Arbeitsmediums als Schmiermittel wird ein auch nach längeren Benutzungszeiten hochreiner und ein autark wirkender Schmiermittelkreislauf geschaffen.

Die Kühlung des Generatorabschnittes ist in Form einer durch das Kondensat des ORC-Arbeitsmediums durchströmten Kanalanordnung innerhalb des Läufers und/oder Stators ausgebildet. Dadurch wird zusätzlich ein hochreiner Kühlmittelkreislauf gebildet.

Der Läufer weist eine innerhalb der Generatorwelle eingebrachte zentrische Bohrung mit einem innerhalb der Bohrung stehenden, das Kondensat einleitenden Kühlrohr auf. Durch diese Ausgestaltung wird ein Heißlaufen des Läufers durch eine Wärmeabfuhr durch das innerhalb des Läufers strömende ORC-Kondensat verhindert.

Zusätzlich dazu ist bei einer Ausgestaltung mindestens eine, die zentrische Bohrung im Läufer mit der Gleitfläche des Gleitlagers verbindende und das Kondensat von der zentrischen Bohrung in das Gleitlager zuführende Gleitlagerbohrung vorgesehen. Die Schmierung des Gleitlagers wird durch diese Ausbildung mit dem Kühlmittelkreislauf innerhalb des Läufers gekoppelt, wobei der Läufer gekühlt und das Gleitlager gezielt geschmiert wird.

Zusätzlich dazu ist eine thermische Entkoppelung mindestens zwischen dem Stator und dem Dampfgehäuse des Turbinenabschnittes in Form mindestens eines radial von einem Kühlmittel durchströmten, im Statorgehäuse vorgesehenen Hohlraumes zweckmäßig. Diese Ausgestaltung dient der Kühlung des Stators, insbesondere der nahe dem Dampfraum des Turbinenabschnittes gelegenen Statorabschnitte und einer Verhinderung einer thermischen Überlastung des Stators und damit des Generatorabschnittes.

Das den Hohlraum durchströmende Kühlmittel kann ebenfalls das Kondensat des ORC-Arbeitsmittels sein. In diesem Fall wird das Arbeitsmittel in dem Arbeitsmittelkreislauf zum Antreiben der Turbine und in dem Kühl- und Schmiermittelkreislauf ungetrieben werden.

Der erfindungsgemäße ORC-Turbogenerator soll nachfolgend anhand eines Ausführungsbeispiels in Verbindung mit einer Figur näher erläutert werden. Es werden für gleiche bzw. gleich wirkende Teile die selben Bezugszeichen verwendet.

Für eine verständlichere Darstellung wird der Turbogenerator bei der folgenden Erläuterung in einen Generatorabschnitt A und einen Turbinenabschnitt B unterteilt. Der gesamte Turbogenerator weist jedoch einen kompakten und integrierten Aufbau auf, wobei die Abschnitte A und B zusammen eine in sich geschlossene Vorrichtung bilden.

Der Turbinenabschnitt besteht aus einem Turbinengehäuse 1 mit einem innerhalb des Gehäuses drehbar gelagerten Laufrad. Das Laufrad weist ein Laufradunterteil 2, eine Reihe von Laufradschaufeln 3 und ein Laufraddeckband 4 auf. Über eine Düse wird das Laufrad mit dem dampfförmigen Arbeitsmedium beaufschlagt. Die Düse besteht aus einem Düsengrundkörper 5, einer den Strom des Arbeitsmediums optimal leitenden Düsenöffnung 6 und einem Düsenabstandshalter 7 zum Arretieren der Düse in einer zweckmäßigen strömungsgünstigen Stellung zum Laufrad im Turbinenabschnitt. Ein Befestigungsbolzen 8 gewährleistet einen sicheren Sitz des Laufrades auf einer Welle 17, deren Aufbau weiter unten näher dargestellt wird.

Bei dem hier gezeigten Beispiel wird das Turbinenlaufrad tangential angetrieben, während das Arbeitsmedium den Turbinenabschnitt in axialer Richtung verläßt. Die Zuführung des Arbeitsmediums erfolgt über eine Zudampföffnung 9, die in einen Zudampfkanal 10 mündet. Der Zudampfkanal 10 leitet das heiße, dampfförmige Arbeitsmedium in die erwähnte Düsenöffnung 6 weiter. Nach dem Verlassen des Turbinenlaufrades gelangt das Arbeitsmedium in einem Abdampfdiffusor 11, der über eine Abdampföffnung 30 das Arbeitsmedium nach außen ableitet.

Der Generatorabschnitt A schließt sich über ein Lagerschild 12 an den Turbinenabschnitt B an. Über eine Druckausgleichsbohrung 13 ist das Innere des Generatorabschnittes A, insbesondere dessen Läuferraum 22, mit dem Inneren des Turbinenabschnittes B, insbesondere dem Raum des Laufrades, verbunden. Sowohl das Laufrad im Turbinenabschnitt, als auch der Läufer des Generatorabschnittes sind in einem gemeinsamen Gleitlager 14 gelagert und sitzen auf der Generatorwelle 17 auf. Die Generatorwelle 17 ist bis in den Turbinenabschnitt B geführt. Das Laufrad des Turbinenabschnittes ist dort über den bereits genannten Befestigungsbolzen 8 mit der Welle 17 verbunden.

Die Generatorwelle 17 weist eine oder mehrere Gleitlagerbohrungen 15 auf, die mit einer zentrischen Bohrung 16 im Inneren der Generatorwelle in Verbindung stehen. Über die zentrische Bohrung 16 wird das Kondensat des ORC-Arbeitsmediums geführt, wobei die Generatorwelle 17 gekühlt und gleichzeitig die Lauffläche des Gleitlagers 14 durch das über die Gleitlagerbohrung 15 heraus gepresste Kondensat geschmiert wird. Die zentrische Bohrung 16 wird über ein innerhalb der Bohrung stehendes Kühlrohr 27 beschickt. Das darin befindliche Kondensat gelangt unter Druck sowohl auf das Gleitlager 14 auf der Antriebsseite des Generatorabschnittes, als auch auf ein vergleichbares zweites Lager 14a auf der Generatorseite.

Das Kondensat wird nach dem Durchlaufen des Gleitlagers 14 über den Abdampfdiffusor 11 nach außen mit dem Strom des Arbeitsmediums abgeleitet.

In dem hier dargestellten Ausführungsbeispiel ist der Generatorabschnitt als ein permanent erregter Synchrongenerator ausgebildet. Der Läufer des Generators besteht dabei aus einer Reihe von auf die Welle 17 aufgesetzten Permanentmagneten 18. Die Permanentmagnete können beispielsweise aufgeklebt oder mit Kohlefaserbandagen gesichert sein. Die Statorwicklung besteht in dem dargestellten Ausführungsbeispiel aus einer Ständerwicklung 19, die mit einem Verguss 20 versehen ist. Der Stator und damit der gesamte Generatorabschnitt ist in einem Statorgehäuse 21 untergebracht, das direkt an den Turbinenabschnitt B bzw. dessen Gehäuse 1 anschließt und mit diesem dicht verbunden ist. Wie erwähnt wird der Läuferraum 22 durch die Druckausgleichsbohrung 13 fortlaufend in Richtung des Turbinenabschnittes, insbesondere des Turbineninnenraums, entlüftet. Infolge der dort herrschenden Strömungsmechanik bildet sich ein teilweiser Unterdruck aus, der zu einer Verringerung der Luftreibung im Läuferraum führt.

Das Statorgehäuse 21 ist für eine thermische Entkopplung des Generatorabschnitts A vom Turbinenabschnitt B gekühlt. Dadurch werden die Köpfe der Statorwicklung im Generatorabschnitt vor einer Überhitzung geschützt. Hierzu weist das Statorgehäuse mindestens im Anschlussbereich zum Turbinenabschnitt, also auf der Antriebsseite des Generators, einen ringförmigen, radial von einem Kühlmittel durchströmten Hohlraum 23 auf. Dem Hohlraum 23 schließt sich in diesem Ausführungsbeispiel die eigentliche Statorkühlung 24 an, die sich mindestens abschnittsweise über die Mantelfläche des Statorgehäuses erstreckt und von dem Kühlmittel in axialer Richtung durchflossen wird. Die Komponenten 23 und 24 werden von einem Kühlmittelvorlauf 25 und einem Kühlmittelrücklauf 26 beschickt bzw. entleert.

Die zentrische Bohrung 16 wird wie beschrieben von dem Kühlrohr 27 beschickt. Das darin strömende Kühlmittel wird in die zentrische Bohrung gedrückt und tritt über die Gleitlagerbohrungen 15 und 15a in die Gleitlager 14 und 14a aus. Das Kühlmittel, für das wie beschrieben das Kondensat des Arbeitsmediums verwendet wird, tritt aus dem Gleitlager 14 in den Läuferraum 22 und wird von dort teilweise in den Turbinenabschnitt B abgesaugt oder über einen Kühlmittelablauf 29 aus dem Läuferraum entfernt. Das innerhalb des Gleitlagers 14a vorhandene Kondensat verlässt den Bereich der Generatorwelle 17 über einen Rücklauf 28. Die Anschlüsse 27, 28 und 29 bilden Abschnitte eines externen, dem Turbogenerator zugeordneten Kühlmittelkreislaufs, an den auch die Zu- und Abläufe 25 und 26 angeschlossen sein können. Bei der Verwendung des Kondensates des Arbeitsmediums als Kühl- und Schmiermittel des Turbogenerators liegt es nahe, die Anschlüsse für den Zuund Rücklauf des Kühlmittels an den Vorratsbehälter des kondensierten Arbeitsmediums anzuschließen. Die für den thermodynamischen Kreisprozess notwendige Speisepumpe erzeugt in diesem Fall den für den Kühl- und Schmiermittelkreislauf erforderlichen Druck. Das Kondensat selbst ist weitgehend frei von Verunreinigungen, da es im thermodynamischen Kreisprozess eine Dampfphase durchläuft, bei dem sich das Arbeitsmedium von den eingetragenen Verunreinigungen durch Destillationsprozesse trennt.

Der Generator weist weiterhin die üblichen elektrischen Kabelanschlüsse auf. In dem gezeigten Beispiel sind diese aus der Statorwicklung über eine Kabelsabschottung 31 in einen Klemmkasten 32 mit einer darin angebrachten üblichen elektrischen Schaltung, beispielsweise einer Gleichrichterschaltung oder dergleichen geführt.

Es ist klar, dass im Rahmen fachmännischen Handelns an dem gezeigten Ausführungsbeispiel eine Reihe von Änderungen erfolgen können, ohne den erfindungsgemäßen Grundgedanken zu verlassen, wie er im unabhängigen Anspruch definiert ist. Weitere Ausführungsformen ergeben sich aus den Unteransprüchen.

### Bezugszeichenliste

- A: Generatorabschnitt
- B: Turbinenabschnitt
- 1: Turbinengehäuse
- 2: Laufradunterteil
- 3: Laufradschaufeln
- 4: Laufraddeckband
- 5: Düsengrundkörper
- 6: Düsenöffnung
- 7: Düsenabstandshalter
- 8: Befestigungsbolzen
- 9: Zudampföffnung
- 10: Zudampfkanal
- 11: Abdampfdiffusor
- 12: Lagerschild
- 13: Druckausgleichsbohrung
- 14: Gleitlager
- 14b: zweites Gleitlager
- 15: Gleitlagerbohrung
- 15b: zweite Gleitlagerbohrung
- 16: zentrische Bohrung
- 17: Generatorwelle
- 18: Permanentmagnet
- 19: Ständerwicklung
- 20: Verguss
- 21: Ständergehäuse
- 22: Läuferraum
- 23: Hohlraum
- 24: Statorkühlung
- 25: Kühlmittelvorlauf
- 26: Kühlmittelrücklauf
- 27: Kühlrohr
- 28: Rücklauf
- 29: Kühlmittelablauf
- 30: Turbineabdampföffnung
- 31: Kabelabschottung
- 32: Klemmkasten

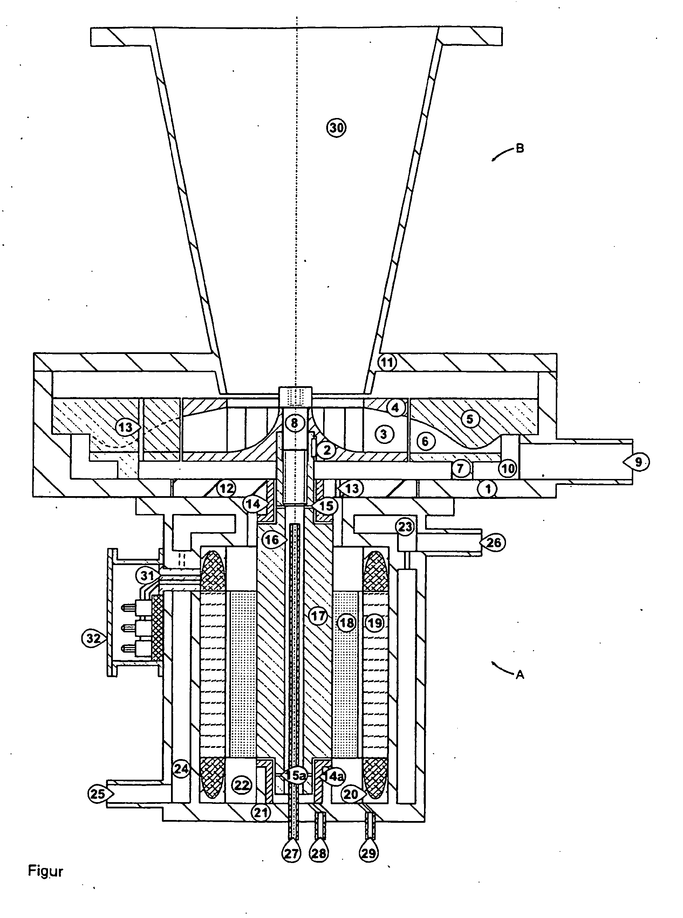

## Patentansprüche

1. Organic Rankine Zyklus (ORC) - Turbogenerator für ein ORC-Arbeitsmedium und ein Kondensat dieses ORC-Arbeitsmediums in einer axialen Anordnung mit einem Generatorabschnitt (A) und Turbinenabschnitt (B), wobei
der Generatorabschnitt (A) ein zur Umgebung hin dichtes und druckfest ausgebildetes Statorgehäuse (21) mit einem in Richtung des Abdampfraumes (11) des Turbinenabschnitts offenen Läuferraum (22) aufweist,
**dadurch gekennzeichnet, dass**
der Läufer eine innerhalb der Generatorwelle (17) eingebrachte zentrische Bohrung (16) mit einem innerhalb der Bohrung stehenden, das Kondensat des ORC-Arbeitsmediums einleitenden Kühlrohr (27) aufweist.

2. Turbogenerator nach Anspruch 1,
**dadurch gekennzeichnet, dass**
mindestens ein, durch das Kondensat des ORC-Arbeitsmittels geschmiertes Gleitlager (14; 14a) zur Lagerung der Generatorwelle (17) vorgesehen ist.

3. Turbogenerator nach Anspruch 2,
**gekennzeichnet durch**
mindestens eine, die zentrische Bohrung (16) mit der Gleitfläche des Gleitlagers (14; 14a) verbindende und das Kondensat des ORC-Arbeitsmediums von der zentrischen Bohrung (16) in das Gleitlager zuführende Gleitlagerbohrung (15; 15a).

4. Turbogenerator nach einem der vorhergehenden Ansprüche,
**dadurch gekennzeichnet, dass**
das Statorgehäuse (21) für eine thermische Entkopplung des Generatorabschnitts (A) vom Turbinenabschnitt (B) gekühlt ist und hierfür das Statorgehäuse (21) mindestens im Anschlussbereich zum Turbinenabschnitt (B), also auf der Antriebsseite des Generators, einen ringförmigen, radial von einem Kühlmittel durchströmten Hohlraum (23) aufweist.

5. Turbogenerator nach Anspruch 4,
**dadurch gekennzeichnet, dass**
das den Hohlraum (23) durchströmende Kühlmittel das Kondensat des ORC-Arbeitsmediums ist.

## Claims

1. Organic Rankine Cycle (ORC) turbogenerator for an ORC working medium and a condensate of said working medium in an axial arrangement having a generator portion (A) and a turbine portion (B), wherein
the generator portion (A) has a stator housing (21) formed to be tight and pressure-resistant toward the environment, with a rotor chamber (22) that is open toward the exhaust steam chamber (11) of the turbine portion,
**characterized in that**
the rotor has a central bore (16) placed within the generator shaft (17), having a cooling pipe (27) standing within the bore which introduces the condensate of the ORC working medium.

2. Turbogenerator according to claim 1,
**characterized in that**
at least one slide bearing (14; 14a) lubricated by the condensate of the ORC working medium is provided to support the generator shaft (17).

3. Turbogenerator according to claim 2,
**characterized by**
at least one slide bearing bore (15; 15a) which connects the central bore (16) to the sliding surface of the of the slide bearing (14; 14a) and supplies the condensate of the ORC working medium from the central bore (16) to the slide bearing.

4. Turbogenerator according to any one of the preceding claims,
**characterized in that**
for thermal decoupling of the generator portion (A) from the turbine portion (B), the stator housing (21) is cooled, and the stator housing (21), at least in the connection area to the turbine portion (B), thus on the generator's drive side, has an annular hollow space (23) through which a coolant flows radially.

5. Turbogenerator according to claim 4,
**characterized in that**
the coolant flowing through the hollow space (23) is the condensate of the ORC working medium.

## Revendications

1. Turbogénérateur à cycle organique de Rankine ORC) pour un milieu de travail ORC et un condensat de ce milieu de travail ORC dans un agencement axial avec une portion formant générateur (A) et une portion formant turbine (B), dans lequel
la portion formant générateur (A) comprend un boîtier de stator (21) réalisé étanche vis-à-vis de l'environnement et résistant à la pression et comportant une chambre de rotor (22) ouverte en direction de la chambre d'évaporation (11) de la portion formant turbine,
**caractérisé en ce que**
le rotor comprend un perçage central (16) ménagé à l'intérieur de l'arbre (17) du générateur, avec un tube de refroidissement (27) placé à l'intérieur du perçage et introduisant le condensat du milieu de travail ORC.

2. Turbogénérateur selon la revendication 1,
**caractérisé en ce qu'**il est prévu au moins un palier lisse (14 ; 14a), lubrifié par le condensat du milieu de travail ORC pour le montage de l'arbre (17) du générateur.

3. Turbogénérateur selon la revendication 2,
**caractérisé par** au moins un perçage pour palier lisse (15 ; 15a) qui relie le perçage central (16) avec la surface de glissement du palier lisse (14 ; 14a), et qui amène le condensat du milieu de travail ORC depuis le perçage central (16) jusque dans le palier lisse.

4. Turbogénérateur selon l'une des revendications précédentes,
**caractérisé en ce que**, pour un découplage thermique de la portion formant générateur (A) vis-à-vis de la portion formant turbine (B), le boîtier de stator (21) est refroidi et à cet effet le boîtier de stator (21) comprend, au moins dans la zone de raccordement vers la portion formant turbine (B), donc sur le côté entraînement du générateur, une cavité de forme cylindrique (23), traversée radicalement par un agent de refroidissement.

5. Turbogénérateur selon la revendication 4,
**caractérisé en ce que** l'agent de refroidissement qui traverse la cavité (23) est le condensant du milieu de travail ORC.
